# EUROPEAN PATENT APPLICATION

(11) **EP 4 432 482 A1**
(43) Date of publication of application: **18.09.2024**
(21) Application number: 24163752.9
(22) Date of filing: 15.03.2024
(51) Int. Cl.: H01R 13/52, H01R 13/74

(54) **ELECTRICAL CONNECTOR ASSEMBLY WITH POTTING MATERIAL SEAL**

(30) Priority: 15.03.2023 US 202363452300 P; 14.03.2024 US 202418604872
(71) Applicant: Aptiv Technologies AG, 8200 Schaffhausen (CH)
(72) Inventor: Lovitz, William, Niles, OH 44446 (US); Musso, Ruben, C.P. 25198 Saltillo, Coahuila (MX)
(74) Representative: Bardehle Pagenberg Partnerschaft mbB Patentanwälte Rechtsanwälte

(57) **Abstract**

An electrical connector assembly (100, 200, 300, 400, 500, 600) configured to be disposed within an opening of an electrical device case surrounded by a sealing wall extending from an internal surface of the electrical device case includes a connector header (104, 204, 304, 404, 504, 604) configured to be disposed outside of the electrical device case, a potting material seal (102, 202, 302, 402, 502, 602) formed of a resilient material defining a conductor passage configured to receive and engage the electrical conductor and an outer edge configured to engage the sealing wall, thereby inhibiting a liquid potting material introduced into the electrical device case from intruding into the connector header (104, 204, 304, 404, 504, 604), and a seal retainer (114, 210, 312, 512, 610) having an opening in which the electrical conductor is disposed and configured to retain the potting material seal (102, 202, 302, 402, 502, 602) within the sealing wall.

## Description

This disclosure is directed to an electrical connector assembly having a seal configured to inhibit the ingress of potting material into the connector.

Some electric vehicle manufacturers have adopted requirements for sealing electrical connections to high voltage battery packs that require a potting material to be applied on the inside of the battery pack case so that these electrical connections will not be exposed to gases produced inside the battery pack. Some electric vehicle manufacturers have requested that the electrical connector headers allow the potting material to be applied inside the battery pack case after headers are assembled onto the battery pack case.

Current electrical connector header designs are not well suited for potting material to be applied in this manner. Typically, an electrical connector header is attached to an outside of the battery pack case. The electrical connector header is designed to receive a female connector assembly from outside the battery pack. The electrical connector header is sealed to environmental ingress from outside the battery pack case once the female connector assembly is mated to the header. The electrical connector header is designed to receive a male connector assembly with terminals and wires, which is plugged into the electrical connector header from inside the battery pack case. Usually, electrical connector headers include an inner metal shield with clearance between the metal shield and an outer plastic housing of the electrical connector header. Additionally, there are clearances between the mating case indexing features and the header assembly. Further, the male connector assembly has clearances to fit inside the shield and openings to accept terminals and wires. The clearance between these components will not allow a standard liquid potting material to be contained within the battery pack case if it is applied to the back side of the electrical connector header.

In some aspects, the techniques described herein relate to an electrical connector assembly configured to be disposed within an opening of an electrical device case surrounded by a sealing wall extending from an internal surface of the electrical device case, said electrical connector assembly including: a connector header configured to be disposed outside of the electrical device case; a potting material seal formed of a resilient material defining a conductor passage configured to receive and engage the electrical conductor and an outer edge configured to engage the sealing wall, thereby inhibiting a liquid potting material introduced into the electrical device case from intruding into the connector header; and a seal retainer having an opening in which the electrical conductor is disposed and configured to retain the potting material seal within the sealing wall.

In some aspects, the techniques described herein relate to a method of assembling a battery pack case, including: attaching a connector header to an external surface of the battery pack case around an opening in the battery pack case, wherein the opening surrounded by a sealing wall extending from an internal surface of the battery pack case; inserting a terminal of an electrical conductor within a connector housing; inserting a terminal position assurance (TPA) device defining an arm configured to retain the terminal within a connector housing; inserting the electrical conductor within a conductor passage of a potting material seal formed of a resilient material and moving the potting material seal along the electrical conductor until it is in contact with the TPA device; inserting the electrical conductor within an opening of a seal retainer and moving the seal retainer along the electrical conductor until it is in contact with the potting material seal; inserting the connector housing into the connector header while simultaneously inserting the potting material seal into the sealing wall; and pouring a liquid potting material into the battery pack case such that the liquid potting material contacts at least a portion of the seal retainer.

Embodiments of the present invention will now be described by way of example with reference to the accompanying drawings, in which:
FIG. 1A illustrates an isometric view of an electrical connector assembly with a potting material seal according to a first embodiment.
FIG. 1B illustrates an exploded view of the electrical connector assembly of FIG. 1A according to the first embodiment.
FIG. 2A illustrates an exploded view of a terminal retainer, potting material seal, and seal retainer of the electrical connector assembly of FIG. 1A according to the first embodiment.
FIG. 2B illustrates a rear assembly view of the terminal retainer, potting material seal, and seal retainer of FIG. 2A according to the first embodiment.
FIG. 2C illustrates a front assembly view of the terminal retainer, potting material seal, and seal retainer of FIG. 2A according to the first embodiment.
FIGs. 3A to 4B illustrate a sequence of assembling the electrical connector assembly of FIG. 1A according to the first embodiment.
FIG. 4C illustrates a cross section view of the electrical connector assembly of FIG. 4B according to the first embodiment.
FIG. 5A illustrates an isometric view of an electrical connector assembly with a potting material seal according to a second embodiment.
FIG. 5B illustrates an exploded view of the electrical connector assembly of FIG. 5A according to the second embodiment.
FIGs. 6A to 6C illustrate a sequence of assembling the electrical connector assembly of FIG. 5A according to the second embodiment.
FIG. 7 illustrates an isometric view of an electrical connector assembly with a potting material seal according to a third embodiment.
FIG. 8 illustrates an exploded isometric view of the electrical connector assembly of FIG. 7 according to a third embodiment.
FIG. 9 illustrates an isometric view of an electrical connector assembly with a potting material seal according to a fourth embodiment.
FIG. 10 illustrates the electrical connector assembly of FIG. 9 attached to a substrate according to the fourth embodiment.
FIGs. 11 to 13 illustrate a sequence of assembling the electrical connector assembly of FIG. 9 according to the fourth embodiment.
FIG. 14A illustrates an exploded view of an electrical connector assembly with a potting material seal according to a fifth embodiment.
FIG. 14B illustrates a potting material seal retainer of the electrical connector assembly of FIG. 14A according to a fifth embodiment.
FIG. 15A illustrates the potting material seal retainer of the electrical connector assembly of FIG. 14A installed in a proper location according to a fifth embodiment.
FIG. 15B illustrates the potting material seal retainer of the electrical connector assembly of FIG. 14A installed in an improper location according to a fifth embodiment.
FIG. 16A illustrates an exploded view of an electrical connector assembly with a potting material seal according to a sixth embodiment.
FIG. 16B illustrates an exploded view of another electrical connector assembly with a potting material seal according to the sixth embodiment.

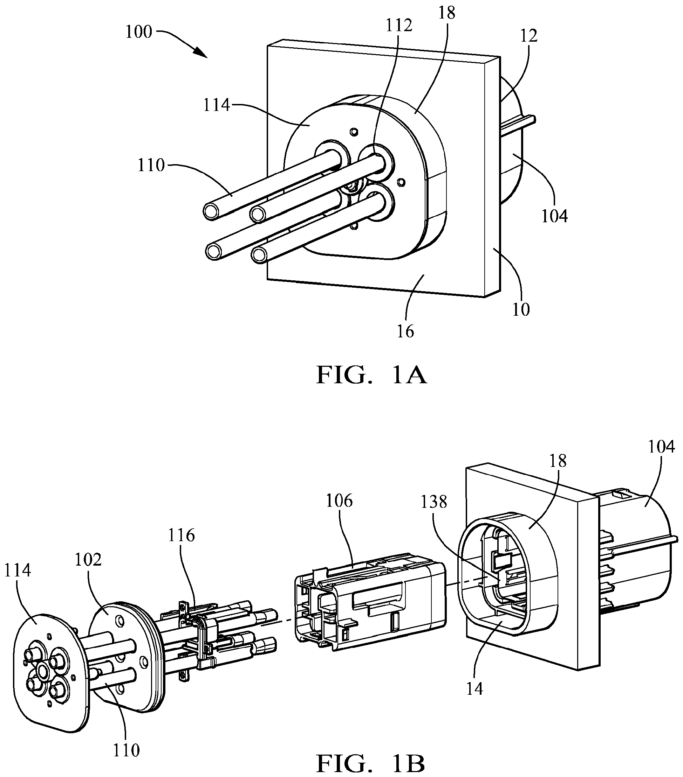

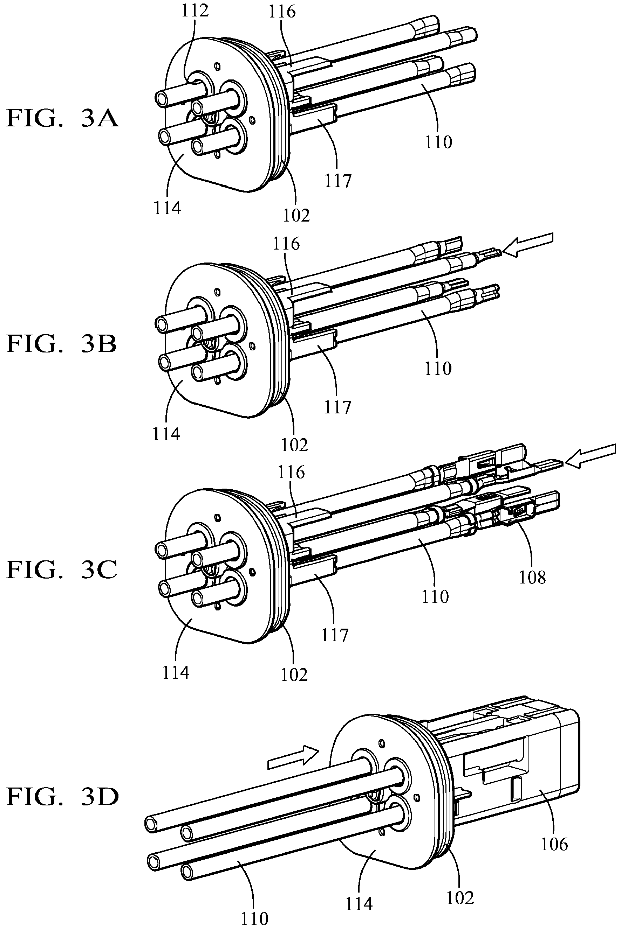

FIGs. 1A through 4C show a first non-limiting example of an electrical connector assembly, hereafter referred to as the assembly 100 that is configured to make an electrical connection through an electrical device case, e.g., an electrical vehicle's battery pack case 10. For example, the electrical vehicle battery pack case 10 shown in FIGs. 1A, 1B includes an internal surface 16 that houses/surrounds a battery pack (not shown). A potting material may be poured into the interior of the battery pack case 10 to seal the battery pack. It is desirable for the electrical connector assembly 100 to inhibit the liquid potting material poured into the battery pack case 10 from entering the electrical connector assembly 100. In some embodiments, the assembly 100 has a connector header 104 that is disposed outside of the battery pack case 10. In some embodiments, the connector header 104 is attached to an external surface 12 of the battery pack case around an aperture or opening 14 in the battery pack case 10. An inner surface 16 of the battery pack case 10 defines a sealing wall 18 surrounding the opening 14. The assembly 100 includes a connector housing 106 that contains a number of electrical terminals 108 (shown in FIG. 3C) connected to wire cables 110. The connector housing 106 is inserted into the connector header 104, preferably from the inside of the battery pack case 10. The assembly 100 includes a potting material seal 102 that is configured to inhibit a liquid potting material poured into the battery pack case 10 from entering the electrical connector assembly 100 before the patting material can be cured and hardened.

The potting material seal 102 is formed of a resilient material, such as a silicone rubber or other elastomeric material. The potting material seal 102 defines a number of conductor passages 112 through which the wire cables 110 extend. In the embodiments shown in FIG. 1A-4C, the potting material seal 102 includes four apertures 112 for receiving wire cables 110, as well as attachment passage 120 and a plurality of alignment apertures 128 described in more detail below. The potting material seal 102 is placed within the sealing wall 18 around the opening 14 in the battery pack case 10 and is sized, shaped, and arranged such that the outer edges of the potting material seal 102 are in compressive contact with the sealing wall 18. The conductor passages 112 are sized, shaped, and arranged such that the walls of the conductor passages 112 are in compressive contact with the wire cables 110. A seal retainer 114 is then placed over the potting material seal 102 and is attached to a terminal position assurance (TPA) device 116 that is configured to hold the electrical terminals 108 in their proper location within the connector housing 106. In some embodiments the TPA defines an arm 117 that is configured to retain the terminal or terminals 108 within the connector housing 106. The seal retainer 114 also provides strain relief for the wire cables 110.

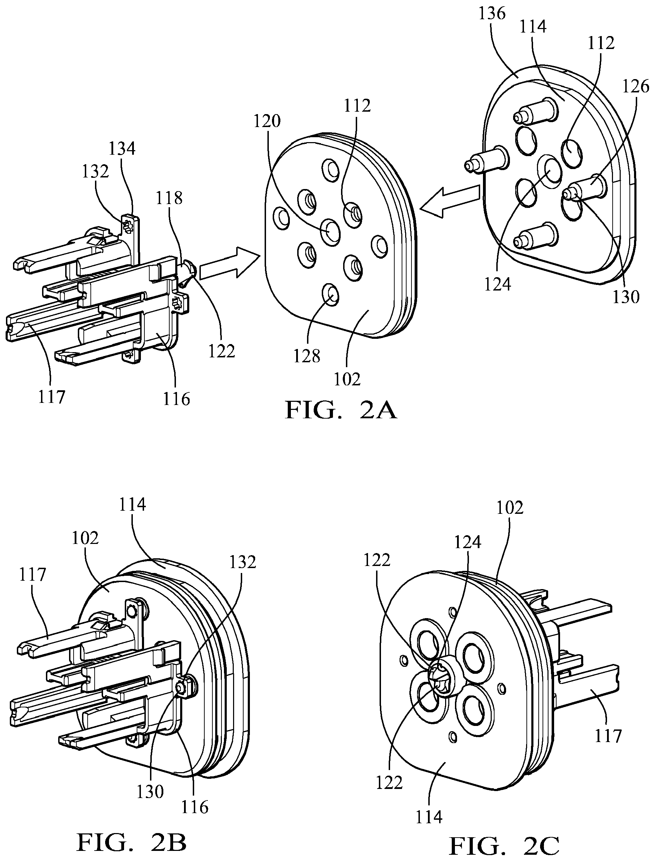

FIG. 2A is an exploded view of the TPA device 116, the potting material seal 102, and the seal retainer 114 and FIGS. 2B and 2C are rear and front views, respectively, of the TPA device 116, the potting material seal 102, and the seal retainer 114 in an assembled state. As shown in FIG. 2A, the potting material seal 102 is secured between the seal retainer 114 and the TPA device 116 by an attachment post 118 that extends from the TPA device 116 through the attachment passage 120 centrally located in the potting material seal 102. The attachment post 118 engages the seal retainer 114, thereby attaching the seal retainer 114 to the TPA device 116 and securing the potting material seal 102 between the TPA device 116 and the seal retainer 114. The attachment post 118 defines a latching nib 122 at a free end of the attachment post 118 that extends through an attachment hole 124 in the seal retainer 114 and engages an edge of the attachment hole 124 as shown in FIG. 2C.

The seal retainer 114 defines alignment pins 126 that are configured to properly align the seal retainer 114 and potting material seal 102 with the TPA device 116. The alignment pins 126 extend through alignment passages 128 in the potting material seal 102. Tips 130 of the alignment pins 126 are received within alignment apertures 132 defined in tabs 134 extending from the TPA device 116. The seal retainer 114 further includes a ridge 136 that is configured to extend to the sealing wall 18 of the battery pack case 10 (for example, as shown in FIG. 1A).

FIGS. 3A to 4B illustrate a sequence of assembling the electrical connector assembly. FIG. 3A illustrates a plurality of wire cables 110 extending through the TPA device 116, the potting material seal 102, and the seal retainer 114. FIGS. 3B and 3C illustrate the stripping of wire cables 110 and the attachment of electrical terminals 108 to each of the plurality of wire cables 110. FIG. 3D illustrates the insertion of the electrical terminals 108 into the connector housing 106 and the connection of the connector housing 106 with the TPA device 116.

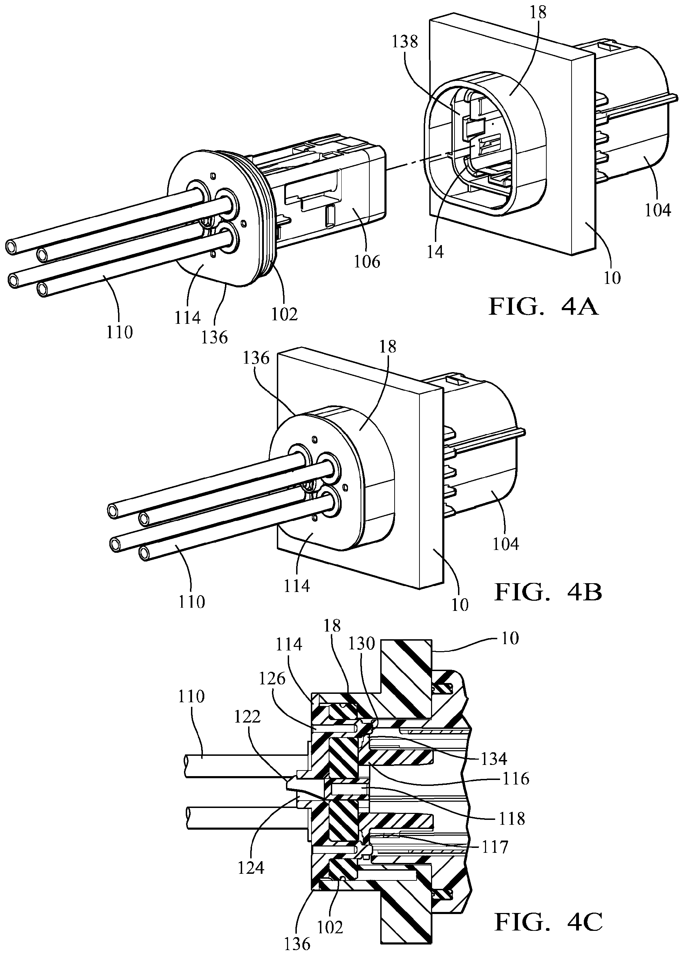

FIGS. 4A and 4B illustrate the connection of the connector housing 106 to the connector header 104 through the opening 14 in the sealing wall 18. As connector housing 106 is inserted within the connector header 104, the potting material seal 102 is placed within the sealing wall 18 around the opening 14 in the battery pack case 10 and is sized, shaped, and arranged such that the outer edges of the potting material seal 102 are in compressive contact with the sealing wall 18. Electrical shielding 138 in the connector header 104contacts the inner wall of the opening 14 in the battery pack case 10, thereby providing an electrical connection between the electrical shielding 138 and the battery pack case 10. Unshielded embodiments of the assembly 100 may also be envisioned.

FIG. 4C is a cross-sectional view of the electrical connector assembly of FIG. 4B according to the first embodiment. As shown in FIG. 4C, potting material seal 102 is secured within sealing wall 18, with the outermost surface of the sealing potting material seal 102 being in contact with an inner surface of the sealing wall 18. Seal retainer 114 is positioned adjacent to the sealing potting material seal 102 and includes a ridge 136 that is configured to extend to the sealing wall 18 of the battery pack case 10. The alignment pins 126 associated with the seal retainer 114 are shown extending through apertures 128 in the sealing potting material seal 102 to secure the sealing material seal 102 between the seal retainer 114 and the TPA device 116.

Proper installation of the connector housing 106 in the connector header 104 assures that the potting material seal 102 is also properly located within the sealing wall 18. This provides the benefit of eliminating inspection of the potting material seal 102 to verify that it is properly located within the sealing wall 18 after the assembly 100 is completed.

The potting material poured within the battery pack case is preferably of a depth that covers the sealing wall 18 and the seal retainer 114. Once cured, the potting material and the assembly 100 provide a gas-tight electrical connection through the battery pack case 10.

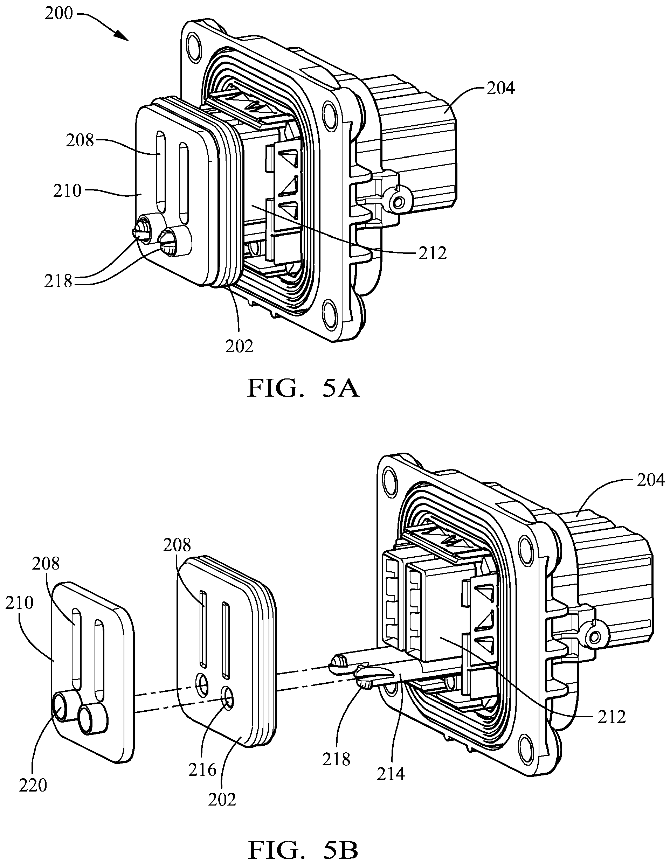

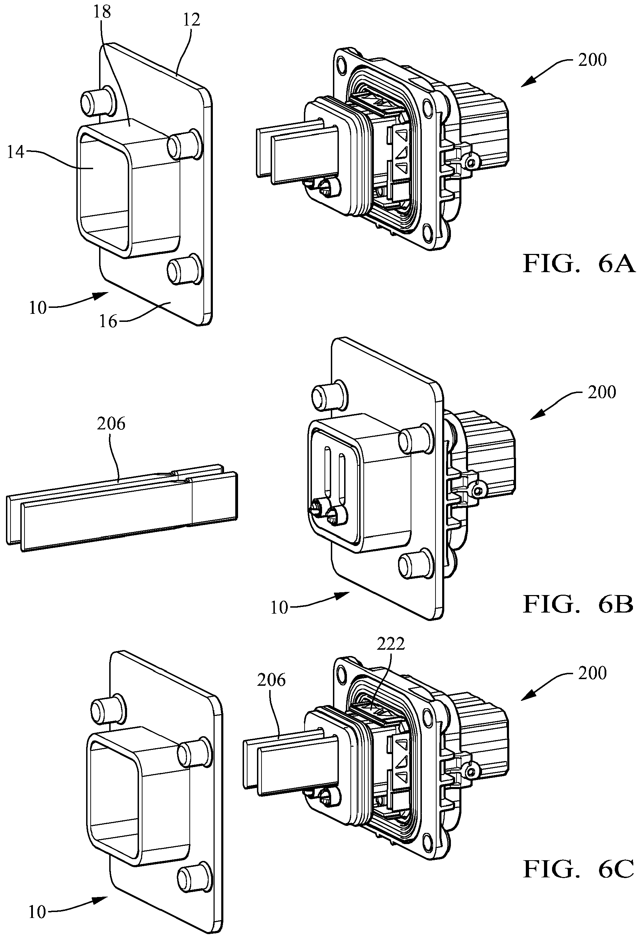

FIGs. 5A to 6C show a second non-limiting example of an electrical connector assembly, hereafter referred to as assembly 200 with a potting material seal 202 that is configured to inhibit liquid potting material poured into a battery pack case 10 from entering the assembly 200. The assembly 200 has a connector header 204 that is attached to an external surface 12 of the battery pack case 10 around an aperture or opening 14 in the battery pack case 10. The connector header 204 may contain a number of electrical terminals (not shown) that are connected to bus bars 206. The ends of the bus bars 206 inserted within the connector header 204 may alternatively form electrical terminals. The bus bars 206 are inserted into the connector header 204, preferably from the inside of the battery pack case 10 as shown in FIG. 6B. Alternatively, as shown in FIG. 6C, the bus bars 206 may be inserted into the assembly 200 prior to the assembly 200 being attached to the battery pack case 10 and inserted into the battery pack case 10 from outside.

The potting material seal 202 is formed of a resilient material, such as a silicone rubber or other elastomeric material. The potting material seal 202 defines a number of conductor passages 208 through which the bus bars 206 extend. The potting material seal 202 is placed within the sealing wall 18 around the opening 14 in the battery pack case 10 and is sized, shaped, and arranged such that the outer edges of the potting material seal 202 are in compressive contact with the sealing wall 18. The conductor passages 208 are sized, shaped, and arranged such that the walls of the conductor passages 208 are in compressive contact with the bus bars 206. A seal retainer 210 is then placed over the potting material seal 202 and is attached to a connector housing 212.

The potting material seal 202 is secured between the seal retainer 210 and the connector housing 212 by attachment posts 214 that extend from the connector housing 212 through attachment passages 216 in the potting material seal 202. The attachment posts 214 engage the seal retainer 210, thereby attaching the seal retainer 210 and securing the potting material seal 202 between the connector housing 212 and the seal retainer 210. The attachment posts 214 defines latching nibs 218 at free ends of the attachment posts 214 that extends through attachment holes 220 in the seal retainer 210 and engage edges of the attachment holes 220. The attachment pins also serve the same purpose as the alignment pins 126 of assembly 100 to properly align the seal retainer 210 and potting material seal 202 with the connector housing 212.

Electrical shielding 222 in the connector header 204 contacts the inner wall of the opening 14 in the battery pack case 10, thereby providing an electrical connection between the electrical shielding 222 and the battery pack case 10. Unshielded embodiments of the assembly 200 may also be envisioned.

The potting material is preferably of a depth that covers the sealing wall 18 and the seal retainer 210. Once cured, the potting material and the assembly 200 provide a gas-tight electrical connection through the battery pack case 10.

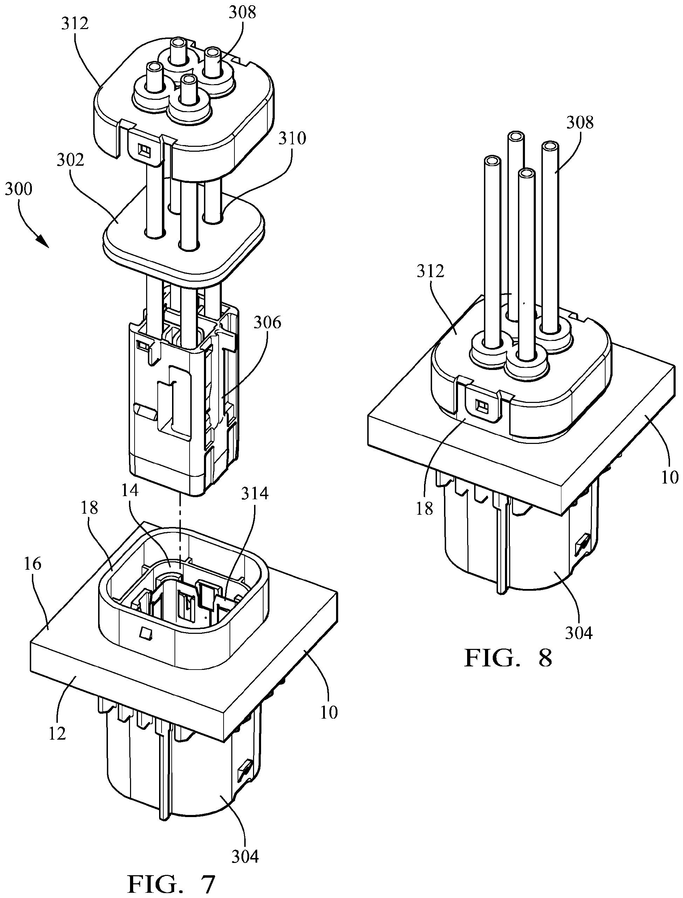

FIGs. 7 and 8 show a third non-limiting example of an electrical connector assembly, hereafter referred to as the assembly 300 with a potting material seal 302 that is configured to inhibit liquid potting material poured into the battery pack case 10 from entering the assembly 300. The assembly 300 has a connector header 304 that is attached to an external surface 12 of the battery pack case 10 around an aperture or opening 14 in the battery pack case 10. An inner surface 16 of the battery pack case 10 defines a sealing wall 18 surrounding the opening 14. The assembly 300 includes a connector housing 306 containing a number of electrical terminals (not shown) connected to wire cables 308. The connector housing 306 is inserted into the connector header 304, preferably from the inside of the battery pack case 10.

The potting material seal 302 is formed of a resilient material, such as a silicone rubber or other elastomeric material. The potting material seal 302 defines a number of conductor passages 310, preferably equal to the number of wire cables 308, through which the wire cables 308 extend. The potting material seal 302 is placed within the sealing wall 18 around the opening 14 in the battery pack case 10 and is sized, shaped, and arranged such that the outer edges of the potting material seal 302 are in compressive contact with the sealing wall 18. The conductor passages 310 are sized, shaped, and arranged such that the walls of the conductor passages 310 are in compressive contact with the wire cables 308. A seal retainer 312 is then placed over the potting material seal 302 and attached to the sealing wall 18 to temporarily hold the potting material seal 302 in place until the potting material is poured into the battery pack case 10. The seal retainer 312 also provides strain relief for the wire cables 308.

Electrical shielding 314 in the connector header 104 contacts the inner wall of the opening 14 in the battery pack case 10, thereby providing an electrical connection between the electrical shielding 314 and the battery pack case 10. Unshielded embodiments of the assembly 300 may also be envisioned.

The potting material is preferably of a depth that covers the sealing wall 18 and seal retainer 312. Once cured, the potting material and the assembly 300 provide a gas-tight electrical connection through the battery pack case 10.

In alternative embodiments, the seal retainer may be eliminated from the electrical connector assembly. In other alternative embodiments, the wire cables may be replaced by bus bars.

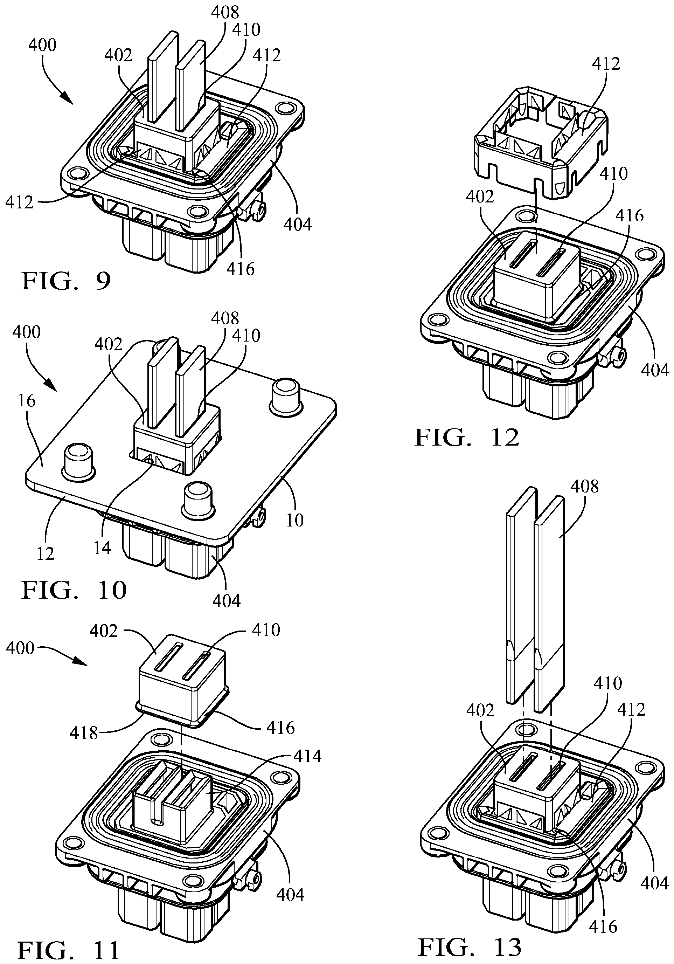

FIGs. 9 and 10 show a fourth non-limiting example of an electrical connector assembly, hereafter referred to as the assembly 400, with a potting material seal 402 that is configured to inhibit liquid potting material poured into the battery pack case 10 from entering the assembly 400. The assembly 400 has a connector header 404 that is attached to an external surface 12 of the battery pack case 10 around an aperture or opening 14 in the battery pack case 10. The connector header 404 contains a number of electrical terminals (not shown) connected to bus bars 408. The bus bars 408 inserted into the connector header 404, preferably from the inside of the battery pack case 10.

The potting material seal 402 is a cap formed of a resilient material, such as a silicone rubber or other elastomeric material. The potting material seal 402 defines a number of bus bar passages 410, preferably equal to the number of bus bars 408, through which the bus bars 408 extend. The potting material seal 402 is placed over bus bar towers 414 that extend from the connector header 404 and are configured to support the bus bars 408. The potting material seal has a flange 416 extending from an open end 418 of the potting material seal 402. This flange may be placed under a shield assembly 412 in the connector header 404 which provides a retainer for the potting material seal 402 to the connector header 404 and to temporarily hold the potting material seal 402 in place until the potting material is poured into the battery pack case 10. The bus bar passages 410 are sized, shaped, and arranged such that the walls of the bus bar passages 410 are in compressive contact with the bus bars 408. In alternative embodiments, the flange 416 may be eliminated from the assembly 400.

The shield assembly 412 contacts the inner wall of the opening 14 in the battery pack case 10, thereby providing an electrical connection between the shield assembly 412 and the battery pack case 10. Unshielded embodiments of the assembly 400 may also be envisioned.

The potting material is preferably of a depth that covers the potting material seal 402. Once cured, the potting material and the assembly 400 provide a gas-tight electrical connection through the battery pack case 10.

FIGs. 11 through 13 illustrate a process of assembling the electrical connector assembly 400. FIG. 11 shows the open end 418 of the potting material seal 402 being placed over the bus bar towers 414. FIG. 12 shows the potting material seal 402 on the bus bar towers 414 and the shield assembly 412 being placed over the flange 416 of the potting material seal to provide the retainer. FIG 13 shows the shield assembly 412 in place over the flange 416 and the bus bars 408 being inserted within the bus bar passages 410 in the potting material seal 402.

The assemblies 300, 400 provides the benefits of:
- Allowing use of connector headers 304, 404 that are already tooled and validated;
- Not requiring additional means for containing the liquid potting material while the potting material is curing;
- Providing the sealing function using molded components that can be processed using common manufacturing methods.

The assemblies 300, 400 may have multiple alternative embodiments including:
- Sealing to any number of wires, bus bars, or other conductors used to interconnect the battery pack.
- Using one-piece retainers as shown or multiple piece retainers assembled around the wires.

The potting material seals do not have to meet the sealing requirements of environmental seals previously used in electrical connectors to prevent ingress of environmental contaminants, such as dust, dirt, water, and other fluids, into the electrical connector. The posting seal merely needs to prevent ingress of a potting material that has a higher viscosity than the environmental contaminants referenced above until the potting material cures, usually a period of less than three hours. After the potting material is cured, it provides protection against contaminants entering the connector header and the potting material seal is no longer needed. This allows the potting material seal to be made from material that is thinner, less compressive, and less chemical resistant than existing environmental seals. The potting material seals may also not require labyrinth edges to provide an adequate seal.

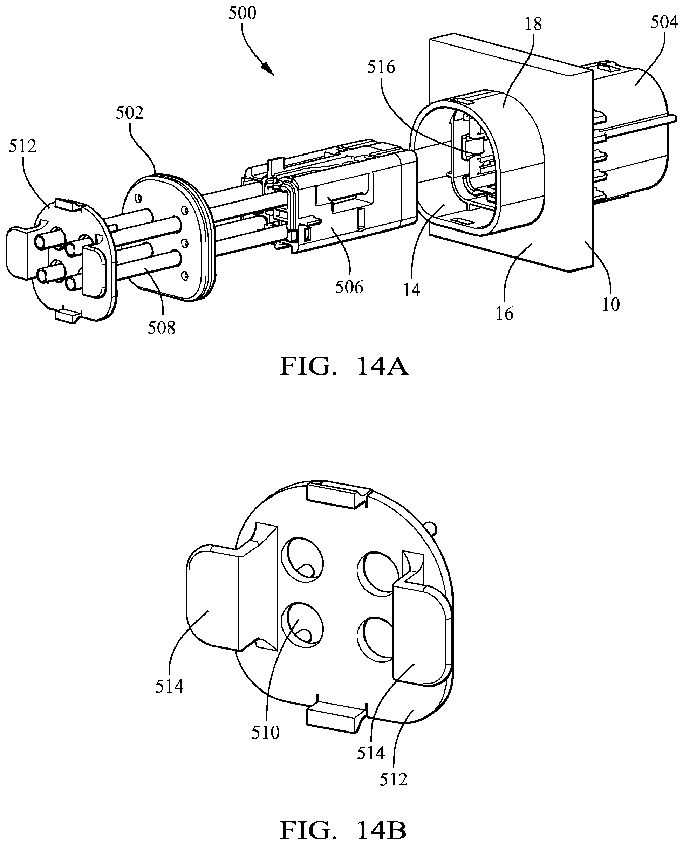

FIGs. 14A to 15B show a fifth non-limiting example of an electrical connector assembly, hereafter referred to as the assembly 500 with a potting material seal 502 that is configured to inhibit liquid potting material poured into the battery pack case 10 from entering the assembly 500. The assembly 500 has a connector header 504 that is attached to an external surface 12 of the battery pack case 10 around an aperture or opening 14 in the battery pack case 10. An inner surface 16 of the battery pack case 10 defines a sealing wall 18 surrounding the opening 14. The assembly 500 includes a connector housing 506 containing a number of electrical terminals (not shown) connected to wire cables 508. The connector housing 506 is inserted into the connector header 504, preferably from the inside of the battery pack case 10.

The potting material seal 502 is formed of a resilient material, such as a silicone rubber or other elastomeric material. As shown in FIG. 14A, the potting material seal 502 defines a number of conductor passages 510, preferably equal to the number of wire cables 508, through which the wire cables 508 extend. The potting material seal 502 is placed within the sealing wall 18 around the opening 14 in the battery pack case 10 and is sized, shaped, and arranged such that the outer edges of the potting material seal 502 are in compressive contact with the sealing wall 18. The conductor passages 510 are sized, shaped, and arranged such that the walls of the conductor passages 510 are in compressive contact with the wire cables 508. A seal retainer 512 is then placed over the potting material seal 502 and attached to the sealing wall 18 to temporarily hold the potting material seal 502 in place until the potting material is poured into the battery pack case 10. The retainer 512 also provides strain relief for the wire cables 508. The retainer 512 defines push flaps 514 shown in FIG. 14B that may be used by an assembly operator to push the seal retainer 512 and thereby the potting material seal 502 into the proper location within the opening 14.

Electrical shielding 516 in the connector header 504 contacts the inner wall of the opening 14 in the battery pack case 10, thereby providing an electrical connection between the electrical shielding 516 and the battery pack case 10. Unshielded embodiments of the assembly 500 may also be envisioned.

The potting material is preferably of a depth that covers the sealing wall 18 and retainer 512. Once cured, the potting material and the assembly 300 provide a gas-tight electrical connection through the battery pack case 10.

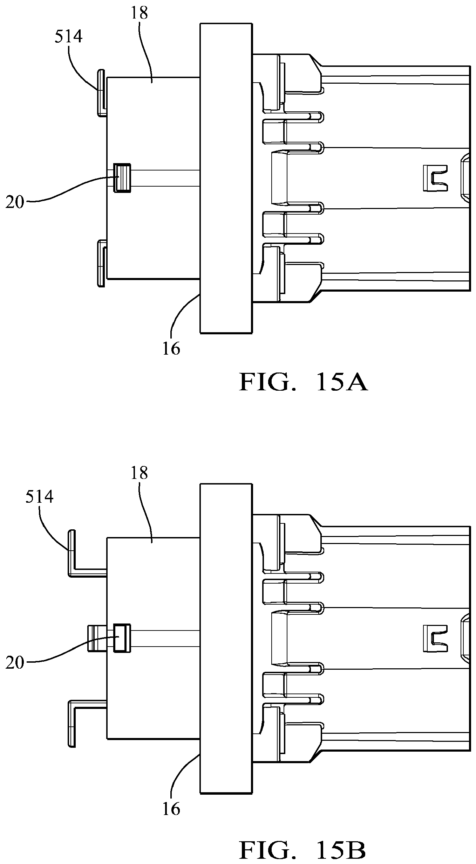

As shown in FIGs. 15A and 15B, the sealing wall 18 has a viewing portal 20 through which the seal retainer 512 is visible when the seal retainer 512 is properly seated in the opening 14 as shown in FIG 15A. Tabs 516 on the seal retainer 512 engage with the viewing portals 20 when the seal retainer 512 is properly seated. The push flaps 514 may also be configured to be in contact with the end of the sealing wall 18 when the seal retainer 512 is properly seated in the opening 14 as shown in FIG 15A.

Fig 15B shows a situation where the seal retainer 512 is improperly seated in the opening 14. When the seal retainer 512 is improperly seated, the potting material seal 502 is visible through the viewing portal 20 rather than the seal retainer 512. The seal retainer 512 and the potting material seal 502 preferably have a contrasting color, thereby making an improperly seated seal retainer 512 more apparent to the assembly operator. The push flaps 514 may also indicate improper seating of the seal retainer 512 by being spaced apart from the end of the sealing wall 18 as shown in FIG 15B.

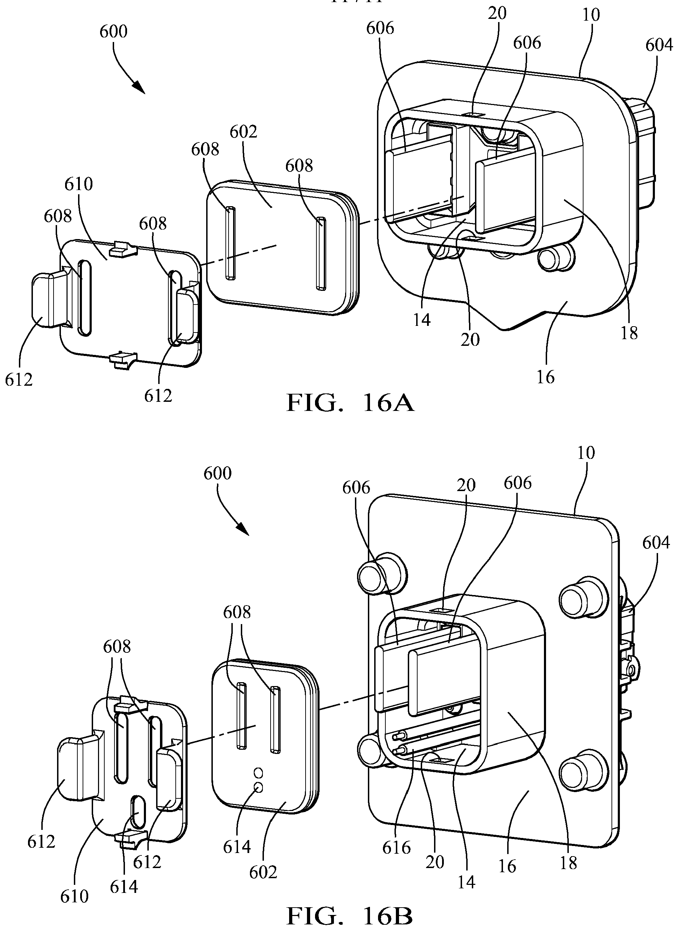

FIG. 16A and 16B show a sixth non-limiting example of an electrical connector assembly, hereafter referred to as the assembly 600, with a potting material seal 602 that is configured to inhibit liquid potting material poured into the battery pack case 10 from entering the assembly 600. The assembly 600 has a connector header 604 that is attached to an external surface 12 of the battery pack case 10 around an aperture or opening 14 in the battery pack case 10. The connector header 604 contains a number of electrical terminals (not shown) connected to bus bars 606. The bus bars 606 are inserted into the connector header 604, preferably from the inside of the battery pack case 10.

The potting material seal 602 is formed of a resilient material, such as a silicone rubber or other elastomeric material. The potting material seal 602 defines a number of bus bar passages 608, preferably equal to the number of bus bars 606, through which the bus bars 606 extend.

The potting material is preferably of a depth that covers the potting material seal 602. Once cured, the potting material and the assembly 600 provide a gas-tight electrical connection through the battery pack case 10.

The potting material seal 602 is placed within the sealing wall 18 around the opening 14 in the battery pack case 10 and is sized, shaped, and arranged such that the outer edges of the potting material seal 602 are in compressive contact with the sealing wall 18. The bus bar passages 608 are sized, shaped, and arranged such that the walls of the bus bar passages 608 are in compressive contact with the bus bars 606. A seal retainer 610 is then placed over the potting material seal 602 and attached to the sealing wall 18 to temporarily hold the potting material seal 602 in place until the potting material is poured into the battery pack case 10. The seal retainer 610 defines push flaps 612 shown in FIGs. 16A and 16B that may be used by an assembly operator to push the seal retainer 610 and thereby the potting material seal 602 into the proper location within the opening 14.

Similar to the assembly 500 shown in FIGs. 15A and 15B, the sealing wall 18 has a viewing portal 20 through which the seal retainer 610 is visible when the seal retainer 610 is properly seated in the opening 14. The push flaps 612 may also be configured to be in contact with the end of the sealing wall 18 when the seal retainer 610 is properly seated in the opening 14.

As shown in FIG. 16B, the potting material seal 602 may also define wire passages 614 though which wires 616, for example, wires for a high voltage interlock circuit, pass through the potting material seal 602.

The potting material is preferably of a depth that covers the sealing wall 18 and seal retainer 610. Once cured, the potting material and the assembly 600 provide a gas-tight electrical connection through the battery pack case 10.

### Discussion of Possible Embodiments

The following are non-exclusive descriptions of possible embodiments of the present invention.

In some aspects, the techniques described herein relate to an electrical connector assembly configured to be disposed within an opening of an electrical device case surrounded by a sealing wall extending from an internal surface of the electrical device case, said electrical connector assembly including: a connector header configured to be disposed outside of the electrical device case; a potting material seal formed of a resilient material defining a conductor passage configured to receive and engage the electrical conductor and an outer edge configured to engage the sealing wall, thereby inhibiting a liquid potting material introduced into the electrical device case from intruding into the connector header; and a seal retainer having an opening in which the electrical conductor is disposed and configured to retain the potting material seal within the sealing wall.

The assembly of the preceding paragraph can optionally include, additionally and/or alternatively any, one or more of the following features, configurations and/or additional components.

In some aspects, the techniques described herein relate to an assembly, further including a terminal position assurance (TPA) device configured to retain a terminal within a connector housing, wherein the TPA device is disposed between the connector housing and the potting material seal and wherein the potting material seal is disposed between the TPA device and the seal retainer.

In some aspects, the techniques described herein relate to an assembly, wherein the seal retainer defines an alignment pin that extends through an alignment passage in the potting material seal.

In some aspects, the techniques described herein relate to an assembly, wherein a tip of the alignment pin is received within an alignment aperture in the TPA device.

In some aspects, the techniques described herein relate to an assembly, wherein the alignment passage in the potting material seal is configured to engage the alignment pin, thereby inhibiting a liquid potting material introduced into the electrical device case from intruding into the connector housing.

In some aspects, the techniques described herein relate to an assembly, wherein the TPA device defines an attachment post that extends through an attachment passage in the potting material seal and engages the seal retainer, thereby attaching the seal retainer to the TPA device and securing the potting material seal between the TPA device and the seal retainer.

In some aspects, the techniques described herein relate to an assembly, wherein the attachment passage in the potting material seal is configured to engage the attachment post, thereby inhibiting a liquid potting material introduced into the electrical device case from intruding into the connector housing.

In some aspects, the techniques described herein relate to an assembly, wherein the attachment post defines a latching nib configured to extend through an attachment hole in the seal retainer and engage an edge of the attachment hole, thereby attaching the seal retainer to the TPA device.

In some aspects, the techniques described herein relate to an assembly, wherein the electrical conductor is an insulated wire cable, and the terminal is attached to an end of the insulated wire cable.

In some aspects, the techniques described herein relate to an assembly, wherein proper engagement of the TPA device with the terminal and the connector housing ensures proper positioning of the potting material seal within the sealing wall of the electrical device case.

In some aspects, the techniques described herein relate to an assembly, wherein the electrical conductor is a bus bar.

In some aspects, the techniques described herein relate to an assembly, wherein the electrical conductor is a bus bar, and a female terminal device is attached to an end of the bus bar.

In some aspects, the techniques described herein relate to an assembly, wherein the seal retainer includes a ridge configured to extend to the sealing wall.

In some aspects, the techniques described herein relate to an assembly, wherein the resilient material forming the potting material seal is a silicone rubber material.

In some aspects, the techniques described herein relate to an assembly, wherein the electrical device case is a battery pack case for an electrical vehicle.

In some aspects, the techniques described herein relate to a method of assembling a battery pack case, including: attaching a connector header to an external surface of the battery pack case around an opening in the battery pack case, wherein the opening surrounded by a sealing wall extending from an internal surface of the battery pack case; inserting a terminal of an electrical conductor within a connector housing; inserting a terminal position assurance (TPA) device defining an arm configured to retain the terminal within the connector housing; inserting the electrical conductor within a conductor passage of a potting material seal formed of a resilient material and moving the potting material seal along the electrical conductor until it is in contact with the TPA device; inserting the electrical conductor within an opening of a seal retainer and moving the seal retainer along the electrical conductor until it is in contact with the potting material seal; inserting the connector housing into the connector header while simultaneously inserting the potting material seal into the sealing wall; and pouring a liquid potting material into the battery pack case such that the liquid potting material contacts at least a portion of the seal retainer.

The method of the preceding paragraph can optionally include, additionally and/or alternatively any, one or more of the following features, configurations and/or additional components.

In some aspects, the techniques described herein relate to a method, further including aligning the TPA device, the potting material seal, and the seal retainer by inserting an alignment pin defined by the seal retainer through an alignment passage in the potting material seal and inserting a tip of the alignment pin within an alignment aperture in the TPA device.

In some aspects, the techniques described herein relate to a method, further including securing the potting material seal between the TPA device and the seal retainer by inserting an attachment post through an attachment passage in the potting material seal and engaging attachment post with the seal retainer.

In some aspects, the techniques described herein relate to a method, wherein proper engagement of the TPA device with the terminal and the connector housing ensures proper positioning of the potting material seal within the sealing wall of the battery pack case.

In some aspects, the techniques described herein relate to a method, wherein the electrical conductor is an insulated wire cable or a bus bar.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. An electrical connector assembly (100, 200, 300, 400, 500, 600) configured to be disposed within an opening of an electrical device case surrounded by a sealing wall extending from an internal surface of the electrical device case, said electrical connector assembly (100, 200, 300, 400, 500, 600) comprising:
a connector header (104, 204, 304, 404, 504, 604) configured to be disposed outside of the electrical device case;
a potting material seal (102, 202, 302, 402, 502, 602) formed of a resilient material defining a conductor passage configured to receive and engage the electrical conductor and an outer edge configured to engage the sealing wall, thereby inhibiting a liquid potting material introduced into the electrical device case from intruding into the connector header (104, 204, 304, 404, 504, 604); and
a seal retainer (114, 210, 312, 512, 610) having an opening in which the electrical conductor is disposed and configured to retain the potting material seal (102, 202, 302, 402, 502, 602) within the sealing wall.

2. The assembly (100) in accordance with claim 1, further comprising a terminal position assurance (TPA) device (116) configured to retain a terminal within a connector housing (106), wherein the TPA device (116) is disposed between the connector housing (106) and the potting material seal (102) and wherein the potting material seal (102) is disposed between the TPA device (116) and the seal retainer (114).

3. The assembly (100, 200, 300, 500, 600) in accordance with claim 1 or 2, wherein the seal retainer (114, 210, 312, 512, 610) defines an alignment pin that extends through an alignment passage in the potting material seal (102, 202, 302, 502, 602).

4. The assembly (100) in accordance with claims 2 and 3, wherein a tip of the alignment pin is received within an alignment aperture in the TPA device (116).

5. The assembly (100, 200, 300, 500) in accordance with claim 3 or 4, wherein the alignment passage in the potting material seal (102, 202, 302, 502) is configured to engage the alignment pin, thereby inhibiting a liquid potting material introduced into the electrical device case from intruding into the connector housing (106, 212, 306, 506).

6. The assembly (100) in accordance with any one of claims 2 to 5, wherein the TPA device (116) defines an attachment post (118) that extends through an attachment passage (120) in the potting material seal (102) and engages the seal retainer (114), thereby attaching the seal retainer (114) to the TPA device (116) and securing the potting material seal (102) between the TPA device (116) and the seal retainer (114).

7. The assembly (100) in accordance with claim 6, wherein the attachment passage (120) in the potting material seal (102) is configured to engage the attachment post (118), thereby inhibiting a liquid potting material introduced into the electrical device case from intruding into the connector housing (106).

8. The assembly (100) in accordance with claim 6 or 7, wherein the attachment post (118) defines a latching nib (122) configured to extend through an attachment hole (124) in the seal retainer (114) and engage an edge of the attachment hole (124), thereby attaching the seal retainer (114) to the TPA device (116).

9. The assembly (100, 300, 500) in accordance with any one of claims 2 to 8, wherein the electrical conductor is an insulated wire cable, and the terminal is attached to an end of the insulated wire cable.

10. The assembly (100) in accordance with any one of claims 2 to 9, wherein proper engagement of the TPA device (116) with the terminal and the connector housing (106) ensures proper positioning of the potting material seal (102) within the sealing wall of the electrical device case.

11. The assembly (100) in accordance with any one of the preceding claims, wherein the seal retainer (114) includes a ridge (136) configured to extend to the sealing wall.

12. A method of assembling a battery pack case, comprising:
attaching a connector header (104) to an external surface of the battery pack case around an opening in the battery pack case, wherein the opening surrounded by a sealing wall extending from an internal surface of the battery pack case;
inserting a terminal of an electrical conductor within a connector housing (106);
inserting a terminal position assurance (TPA) device (116) defining an arm (117) configured to retain the terminal within the connector housing (106);
inserting the electrical conductor within a conductor passage of a potting material seal (102) formed of a resilient material and moving the potting material seal (102) along the electrical conductor until it is in contact with the TPA device (116);
inserting the electrical conductor within an opening of a seal retainer (114) and moving the seal retainer (114) along the electrical conductor until it is in contact with the potting material seal (102);
inserting the connector housing (106) into the connector header (104) while simultaneously inserting the potting material seal (102) into the sealing wall; and
pouring a liquid potting material into the battery pack case such that the liquid potting material contacts at least a portion of the seal retainer (114).

13. The method in accordance with claim 12, further comprising:
aligning the TPA device (116), the potting material seal (102), and the seal retainer (114) by inserting an alignment pin defined by the seal retainer (114) through an alignment passage in the potting material seal (102) and inserting a tip of the alignment pin within an alignment aperture in the TPA device (116).

14. The method in accordance with claim 12 or 13, further comprising:
securing the potting material seal (102) between the TPA device (116) and the seal retainer (114) by inserting an attachment post (118) through an attachment passage (120) in the potting material seal (102) and engaging attachment post (118) with the seal retainer (114).

15. The method in accordance with any one of claims 12 to 14, wherein proper engagement of the TPA device (116) with the terminal and the connector housing (106) ensures proper positioning of the potting material seal (102) within the sealing wall of the battery pack case.
